# EUROPEAN PATENT APPLICATION

(11) **EP 1 267 543 A2**
(43) Date of publication of application: **18.12.2002**
(21) Application number: 01127402.4
(22) Date of filing: 23.11.2001
(51) Int. Cl.: H04L 29/06, H04L 12/56

(54) **Programmable protocol processing engine for network packet devices**

(30) Priority: 14.06.2001 US 881493
(71) Applicant: CYPRESS SEMICONDUCTOR CORPORATION, San Jose California 95134 (US)
(72) Inventor: Jha, Pankaj K., Fremont, California 94538 (US)
(74) Representative: Holmes, Miles Keeton

(57) **Abstract**

A circuit generally comprising a database and a processing circuit. The database may be configured to store a pointer for each first parameter of a network protocol. The processing circuit may be configured to (i) process at least one of the first parameters in an incoming packet in accordance with the pointer to produce a second parameter and (ii) present an outgoing packet containing the second parameter.

## Description

### Field of the Invention

The present invention relates to a method and/or architecture for routers generally and, more particularly, to a programmable protocol processing engine for network packets.

### Background of the Invention

With growing interest in network infrastructures, both for local and wide area networks, there has been a tremendous level of research in the area of networking protocols. The research has resulted in many different packet-framing formats that are employed over different networking media. With more wide area network (WAN) protocols being developed and with more local area network (LAN) traffic being connected to WAN there is a huge set of new protocols with which semiconductor devices must deal.

The many protocols in place have caused network system manufacturers to buy specific semiconductor devices for protocol processing from different vendors. When these devices are not available, system manufacturers have to design their own field programmable gate array and/or complex programmable logic device solutions for processing networking protocols. There is a lot of software and hardware development that goes into designing systems with so many different devices.

Old technology for processing networking packets involved designing dedicated hardware (as a semiconductor IC). Because the logic for each protocol is different, the devices are hardcoded for a particular protocol. For each networking protocol, different parameters related to open systems interconnection model layers need to be processed by the network packet processing devices. While information/payload bytes are passed to the system application, other bytes need to be processed by hardware and/or software within the networking systems. As a result, networking system manufacturers need to buy a multitude of chips from third-party vendors to process these different networking protocols. Each of these chips is different from others in pin-outs and software and hardware configuration parameters. Protocol specific hardware and software are an expensive way to solve network packet processing and results in high cost of procurement, learning involved for the chips, board-level development for the chips, different software programming methods, and a huge inventory of different types of line cards.

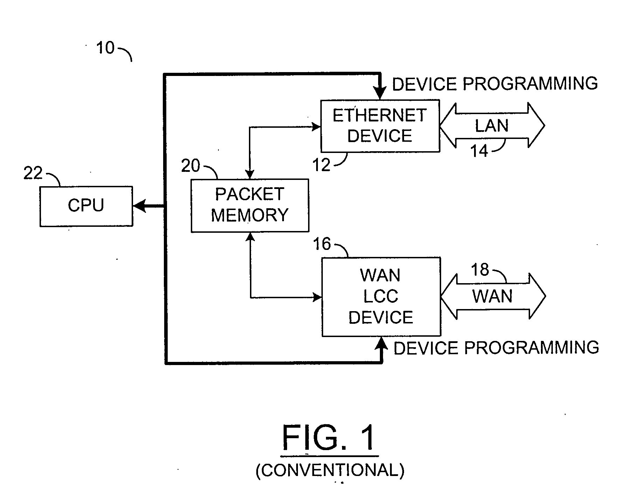

Referring to FIG. 1, a conventional router 10 using conventional protocol processing semiconductors is shown. The router 10 has a dedicated device 12 for interfacing to a LAN 14 having a specific protocol. The router 10 has another dedicated device 16 for interfacing to a WAN 18 having another specific protocol. A packet memory 20 is provided for storage of parameters exchanged between the LAN 14 and WAN 18. A central processing unit (CPU) provides device programming for the devices 12 and 16. Changes to LAN 14 and/or WAN 18 protocols will require replacing the device 12 and/or the device 16.

### Summary of the Invention

The present invention concerns a circuit generally comprising a database and a processing circuit. The database may be configured to store a pointer for each first parameter of a network protocol. The processing circuit may be configured to (i) process at least one of the first parameters in an incoming packet in accordance with the pointer to produce a second parameter and (ii) present an outgoing packet containing the second parameter.

The objects, features and advantages of the present invention include providing a programmable protocol processing engine for network packets that may (i) operate on a wide variety of network protocols, (ii) expand to accommodate new parameter processes independent of software, firmware, or microcode, and/or (iii) operate at high speeds.

### Brief Description of the Drawings

These and other objects, features and advantages of the present invention will be apparent from the following detailed description and the appended claims and drawings in which:
FIG. 1 is a block diagram of a conventional router;
FIG. 2 is a block diagram of a system implementing the present invention;
FIG. 3 is a detailed block diagram of an implementation of a processing circuit and an external circuit;
FIG. 4 is a flow diagram of a method of processing parameters;
FIG. 5 is a parameter processing example for a portion of an Ethernet frame is shown; and
FIG. 6 is a detailed block diagram of a network interface circuit.

### Detailed Description of the Preferred Embodiments

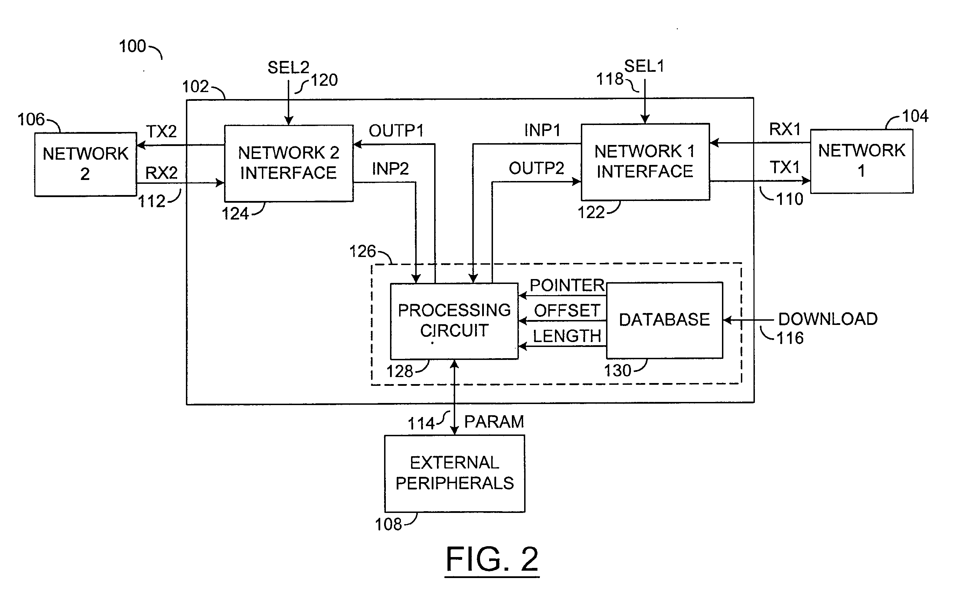

Referring to FIG. 2, a block diagram of a system 100 is shown in accordance with a preferred embodiment of the present invention. The system 100 generally comprises an assembly 102, a first network 104, a second network 106, and one or more optional external circuits 108. The system 100 generally provides processing of parameters exchanged between the first network 104 and the second network 106. Packets may be received from and sent to the networks 104 and 106 as part of frames conforming to one or more of a variety of protocols. The assembly 102 may be programmable to process parameters stored in the packets from any number of protocols that may be implemented for the first network 104 and the second network 106.

The system 100 may be implemented as, but is not limited to, a router, a gateway, a network bridge, a network switch, a concentrator, a multiplexer, or any other assembly that interfaces among two or more networks. The first network 104 and the second network 106 may be implement, but are not limited to, the following protocols, Ethernet (IEEE 802.3), token ring (IEEE 802.5), point-to-point protocol (PPP) (RFC 1221 through 1663), high-level data link control (HDLC), logical link control (LLC)(IEEE 802.2), link access procedure (LAP), serial line interface protocol (SLIP), multi-protocol label switching (MPLS) (RFC 3031), frame relay transport, synchronous optical network (SONET), internet protocol (IP), internetwork packet exchange (IPX) protocol, datagram delivery protocol (DDP), network basic input output system extended user interface (NetBEUI), and the like.

The assembly 102 may have an interface 110 to send a signal (e.g., TX1) and receive a signal (e.g., RX1) to and from the first network 104. The assembly 102 may have an interface 112 to send a signal (e.g., TX2) and receive a signal (e.g., RX2) to and from the second network 106. An interface 114 may be provided in the assembly 102 to exchange a signal (e.g., PARAM) with the external circuit 108. The assembly 102 may have an interface 116 to receive a signal (e.g., DOWNLOAD). An interface 118 may be provided in the assembly 102 to receive a signal (e.g., SEL1). Another interface 120 may be provided in the assembly 102 to receive a signal (e.g., SEL2).

The signal RX1 may be implemented as one or more frames received from the first network 104. The signal TX1 may be implemented as one or more frames presented to the first network 104 for transmission. A format of the signals RX1 and TX1 may be dependent upon the network protocol implemented for the first network 104.

The signal RX2 may be implemented as one or more frames received from the second network 106. The signal TX2 may be implemented as one or more frames presented to the second network 106 for transmission. A format of the signals RX2 and TX2 may be dependent upon the network protocol implemented for the second network 106.

The signal PARAM may be implemented as unmodified and modified parameters. The unmodified parameters may be extracted from the packets within the signals RX1 and RX2. The modified parameters, and possibly some unmodified parameters, may be incorporated into packets within the signals TX1 and TX2 by the assembly 102.

The signal DOWNLOAD may be implemented as a data matrix. The signal DOWNLOAD may contain multiple elements for each type of parameter implemented by the network protocols used for the first network 104 and the second network 106. A user (not shown), generally presents the signal DOWNLOAD to the assembly 102 to match the specific protocols selected for the first network 104 and the second network 106. The signal DOWNLOAD may be used by the assembly 102 to direct processing of parameters. The elements may include, but are not limited to, pointers, offset values, and length values.

The signals SEL1 and SEL2 may be implemented as select signals. The signals SEL1 and SEL2 may be provided to the assembly 102 by the user. The assembly 102 may use the signals SEL1 and SEL2 to determine how to frame the signals TX1 and TX2 respectively and how to de-frame or delineate the signals RX1 and RX2 respectively.

Generally, the assembly 102 may delineate the signals RX1 and RX2 in accordance with the signals SEL1 and SEL2. Processing of the incoming parameters within the signals RX1 and RX2 may be provided in accordance with the elements loaded through the signal DOWNLOAD. The interface 114 may provide a mechanism to couple to the external circuit 108 to expand the parameter processing capability when desired. Framing of the outgoing parameters to generate the signals TX1 and TX2 may also be performed in accordance with the signals SEL1 and SEL2. The assembly 102 may be programmed through the signal DOWNLOAD to handle many different network protocols. The programmable feature and the expansion capability may allow the assembly 102 to adapt to protocol modifications and even new network protocols after an initial installation.

The assembly 102 generally comprises a circuit 122, a circuit 124, and a circuit 126. The circuits 122 and 124 may be implemented as network interface circuits. The circuit 126 may be implemented as a protocol processing engine. The network interface circuits 122 and 124 may provide for presentation and reception of frames to and from the networks 104 and 106. The protocol processing engine 126 may provide the inter-protocol parameter processing between the networks 104 and 106.

The network interface circuit 122 may be coupled to the interface 110 to receive the signal TX1 and present the signal RX1. The network interface circuit 122 may be coupled to the input 118 to receive the signal SEL1. A signal (e.g., INP1) may be presented by the network interface circuit 122 to the protocol processing engine 126. A signal (e.g., OUTP1) may be received by the network interface circuit 122 from the protocol processing engine 126.

The network interface circuit 124 may be coupled to the interface 112 to receive the signal TX2 and present the signal RX2. The network interface circuit 124 may be coupled to the input 120 to receive the signal SEL2. A signal (e.g., INP2) may be presented by the network interface circuit 124 to the protocol processing engine 126. A signal (e.g., OUTP2) may be received by the network interface circuit 124 from the protocol processing engine 126. The signals INP1, OUTP1, INP2 and OUTP2 may be implemented as packets.

The network interface circuits 122 and 124 may be operational to de-frame or delineate the signals RX1 and RX2 to extract the packets within. The network interface circuits 122 and 124 may be further operational to frame the packets within the signals OUTP1 and OUTP2 to assemble the signals TX1 and TX2 respectively. The signals SEL1 and SEL2 may be used by the network interface circuits 122 and 124 to determine a proper structure to use when framing and/or de-framing. Frame delineation may include, but are not limited to, header detection and removal, frame trailer detection and removal, byte stuffing, byte de-stuffing, asynchronous to synchronous conversion, synchronous to asynchronous conversion, error detection and correction, and the like. Framing may include, but is not limited to, header generation, trailer generation, byte stuffing, byte de-stuffing, asynchronous to synchronous conversion, synchronous to asynchronous conversion, forward error correction generation (e.g., CRC and parity), and the like.

The protocol processing engine 126 may receive one or more parameters within the signal INP1 from the network interface circuits 122. The protocol processing engine 126 may manipulate the parameters and/or present the parameters unmodified within the signal OUTP2 to the network interface circuit 124. Likewise, the protocol processing engine 126 may receive the parameters within the signal INP2 from the network interface circuit 124, process the parameters, and then present the parameters within the signal OUTP2 to the network interface circuit 122. The protocol processing engine 126 may be coupled to the interface 114 to exchange the parameters (e.g., signal PARAM) with the external circuit 108. The external circuit 108 may be operational to provide some parameter processing.

The protocol processing engine 126 generally comprises a circuit 128 and a circuit 130. The circuit 128 may be implemented as a processing circuit. The circuit 130 may be implemented as a database. The processing circuit 128 may provide the parameter processing for the assembly 102 with or without assistance from the external circuit 108. The database 130 may provide storage for the elements programmed into the assembly 102 by the signal DOWNLOAD.

The processing circuit 128 may receive the signals INP1 and INP2 from and present the signals OUTP1 and OUTP2 to the network interface circuits 122 and 124. The processing circuit 128 may exchange the signal PARAM with the external circuit 108. The processing circuit 128 may modify the parameters received in the signals INP1 and INP2, with or without the aid of the external circuit 108. The database 130 may store the elements of the signal DOWNLOAD in a lookup table. The elements of the signal DOWNLOAD may instruct the processing circuit 128 how to process the parameters.

A signal (e.g., POINTER) may be presented to the processing circuit 128 from the database 130. Another signal (e.g., OFFSET) may also be presented to the processing circuit 128 from the database 130. A signal (e.g., LENGTH) may be presented to the processing circuit 128 from the database 130. The database 130 may receive the signal DOWNLOAD. The signals POINTER, OFFSET, and LENGTH may convey the elements of the signal DOWNLOAD to the processing circuit 128.

When the processing circuit 128 receives a signal INP (e.g., INP1 or INP2), then the processing circuit 128 may parse the signal INP into one or more individual parameters based upon the signals OFFSET and LENGTH. The signal OFFSET generally identifies a starting position of each parameter within the signal INP. The signal LENGTH generally identifies a length of each parameter starting at the position OFFSET. The signal OFFSET may have a unit of bits or bytes. The signal LENGTH may have units of bits, bytes, half-words or words. Other units may be implemented to meet the design criteria of a particular application. The signal POINTER may then be used to specify how the parameter is to be processed.

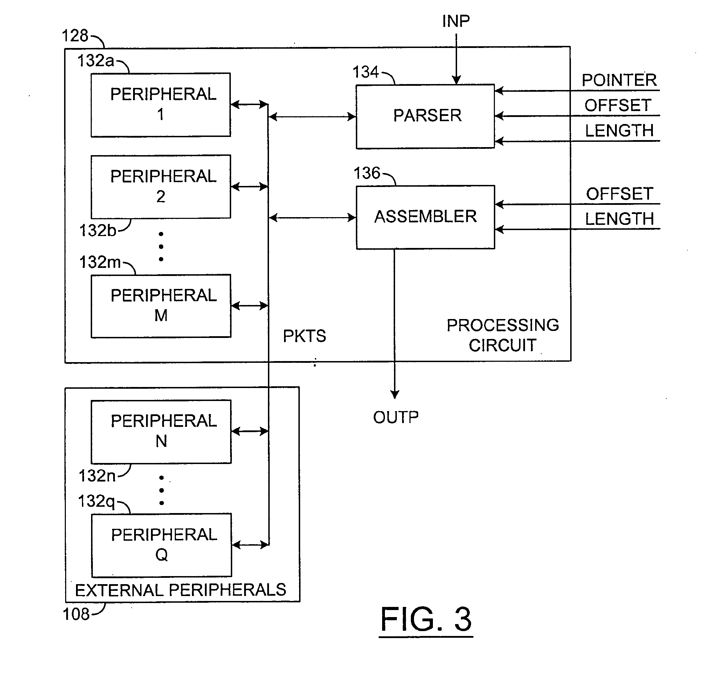

Referring to FIG. 3, a detailed block diagram of an implementation of the processing circuit 128 and the external circuit 108 is shown. The processing circuit 128 generally comprises multiple circuits 132A-M, a circuit 134, and a circuit 136. The external circuit 108 may be implemented a one or more circuits 132N-Q. The circuits 132A-Q may be implemented as peripheral blocks or peripheral circuits. The circuit 134 may be implemented as a parser circuit. The circuit 136 may be implemented as an assembler circuit.

The parser circuit 134 may transform the signal INP into the signal PARAM. The parser circuit 134 may parse or partition the parameters from the signal INP using the signals OFFSET and LENGTH corresponding to the network protocol for the receiving network 104/106. The parser circuit 134 may then direct the extracted parameters to a particular peripheral circuit 132A-Q based upon the signal POINTER.

Each peripheral block 132A-Q may be designed to perform an operation on the parameters. Each peripheral block 132A-Q may perform at least one process of a content addressable memory (CAM) circuit, a time to live (TTL) circuit, a comparison circuit, a counter circuit, a value swapping circuit, a stuffing circuit, a de-stuffing circuit, a cyclic redundancy checksum (CRC) circuit, a parity circuit, a first-in-first-out (FIFO) circuit, a length construction generator circuit, a header error control synchronization circuit, a frame relay lookup circuit, a data link connection identifier (DLCI) lookup circuit, a protocol identification analysis circuit, a point-to-point protocol (PPP) verification circuit, and a parameter discard circuit, a parameter buffer circuit (no parameter modification), and the like. For example, a particular block 132 may implement a layer 2 CAM while another circuit 132 may implement a layer 3 CAM. In another example, a TTL type peripheral block 132 may decrement a value within a packet and compare the decremented value to a predetermined value (e.g., zero). If the decremented value is equal to the predetermined value, then the parameter may be discarded. Other operations may be implemented to meet the design criteria of a particular application.

The assembler circuit 136 may receive the parameters with and/or without modification from the peripheral circuits 132A-Q. The assembler circuit 136 may receive the parameters directly from the parser circuit 134. The assembler circuit 136 may assemble the parameters according to the signal OFFSET and LENGTH for the network protocol of the transmitting network 104/106. The signals OFFSET and LENGTH may represent a location and size of each parameter within the signal OUTP. The assembler 136 may present the assembled parameter within the signal OUTP to the network interface circuits 104 and 106.

Each peripheral block 132A-Q may be implemented as dedicated hardware and/or a programmable processor. In one embodiment, each peripheral block 132A-N within the processing circuit 128 may be a hardware-only implementation. The hardware-only implementation may allow the processing circuit 128 to operate at very high speeds relative to an equivalent operation performed on a processor executing software. By selecting process classes common to many different network protocols, a collection of peripheral blocks 132 may handle the many different network protocols with proper direction from the database 130. Consequently, the assembly 102 may provide savings in installation, operation, and configuration because all assemblies 102 may be of the same type. Configuration of an assembly 102 for a particular application may only require downloading the appropriate elements into the database 130. Dynamic reconfiguration of the assembly 102 may be performed at any time to account for changes in the network protocols or an introduction of a new network protocol.

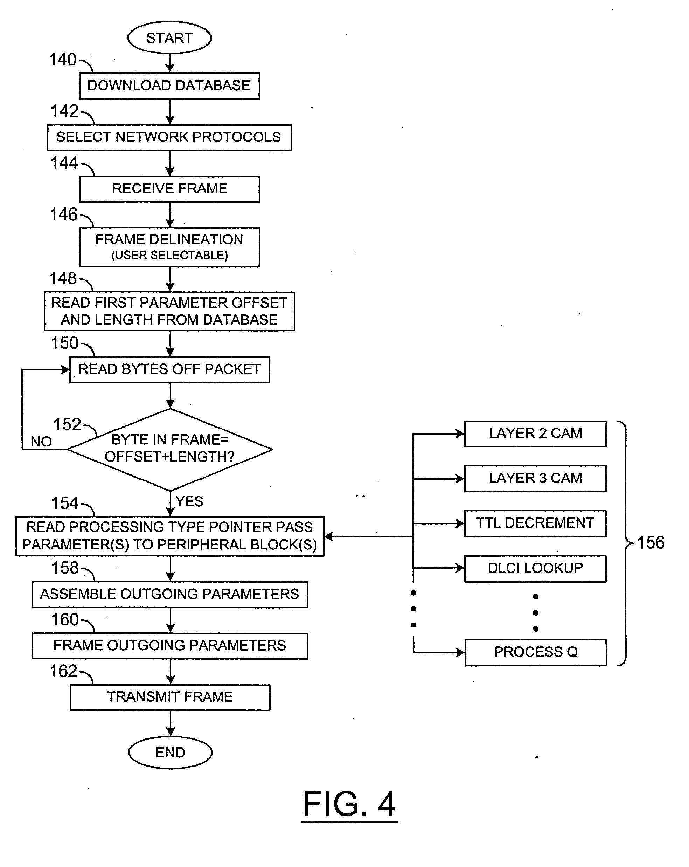

Referring to FIG. 4, a flow diagram of a method of processing parameters is shown. The process may start by configuring the assembly 102. Configuration may include downloading the database 130 to account for the selected network protocols (e.g., block 140). The signals SEL1 and SEL2 may also be set to select the network protocols for the network interface circuits 122 and 124 (e.g., block 142).

While the system 100 is operational, the assembly 102 may receive an incoming frame from one of the networks 104/106 (e.g., block 144). The receiving network interface 122/124 may then delineate the received frame (e.g., block 146) to produce the signal INP. The parser circuit 134 may then read a unit (e.g., one byte) from the signal INP (e.g., block 150). If the unit is not aligned to the signal OFFSET + LENGTH (e.g., the NO branch of decision block 152), then the parser circuit 134 may read another unit from the signal INP (e.g., block 150). If the unit read from the signal INP is aligned to the signal OFFSET + LENGTH (e.g., the YES branch of decision block 152), then the parser circuit 134 may read the signal POINTER (e.g., block 154).

The parameter or parameters extracted from the signal INP may then be passed to one or more peripheral blocks 132A-Q based upon the value of the signal POINTER (e.g., block 154). The parameters may then be processed by the referenced peripheral blocks 132 (e.g., blocks 156). After processing, the parameters may be assembled by the assembler circuit 136 (e.g., block 158). The sending network interface 122/124 may frame the outgoing parameters (e.g., block 160) and then transmit the outgoing frame on the network 104/106 (e.g., block 162).

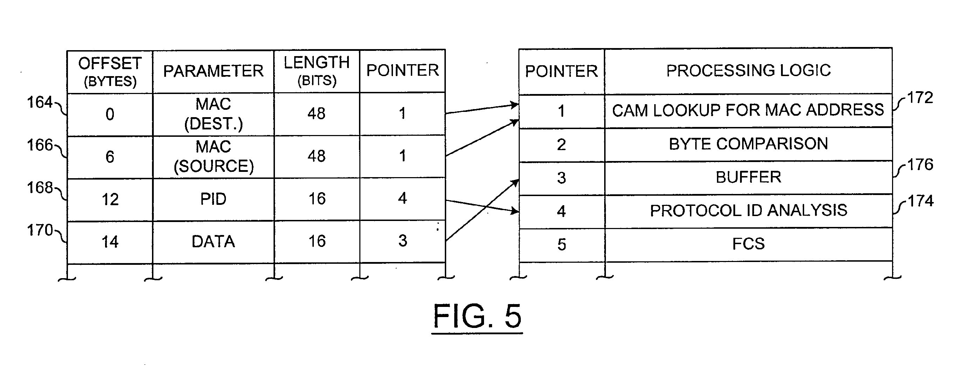

Referring to FIG. 5, a parameter processing example for a portion of an Ethernet frame is shown. The Ethernet frame may comprise several parameters. The first parameter 164 may contain a medium access control (MAC) address for the frame's destination. The second parameter 166 may contain a MAC address for the frame's source. The third parameter 168 may contain a protocol identification value for the frame. The next several parameters may contain data (only one data parameter 170 is shown) . Following the last data value, the Ethernet frame may conclude with a frame check sequence parameter (not shown).

After delineation, by the network interface 104/106, the Ethernet parameters may be presented to the parser circuit 134 in the signal INP. The parser circuit 134 may use the signal OFFSET (zero bytes) and the LENGTH (48 bits) to partition the first parameter 164. The signal POINTER associated with the first parameter 164 may have a value of one. The signal POINTER may direct the first parameter 164 to a first peripheral circuit 132A. The first peripheral circuit 132A may perform a CAM lookup process 172 for the MAC address defined by the first parameter 164. The matching address from the CAM lookup operation may then be presented to the assembler circuit 136.

The parser circuit 134 may use the signal OFFSET (6 bytes) and the signal LENGTH (48 bits) to partition the second parameter 166. The signal POINTER may also have a value of one for the second parameter 166. Thus, the second parameter 166 may also be sent to the first peripheral circuit 132A for a CAM lookup for the MAC address 172 process. The matching address from the second CAM lookup operation may also be present to the assembler circuit 136.

The third parameter 168 may be partitioned using the signal OFFSET (value 12 bytes) and the signal LENGTH (16 bits). The signal POINTER for the third parameter 168 may have a value of 4 to reference the fourth peripheral circuit 132D. The fourth peripheral circuit 132D may perform a protocol identification analysis process 174 on the PID defined by the third parameter 168.

The fourth parameter 170 may be partitioned using the signal OFFSET (14 bytes) and the signal LENGTH (16 bits). The signal POINTER for the fourth parameter 170 may have a value of 3. The third peripheral circuit 132C may perform a buffer process 176 on the fourth parameter 170 to temporarily store the data within the fourth parameter 170 without modification. The buffer process 176 may be repeated for the remaining parameters containing data within the Ethernet frame.

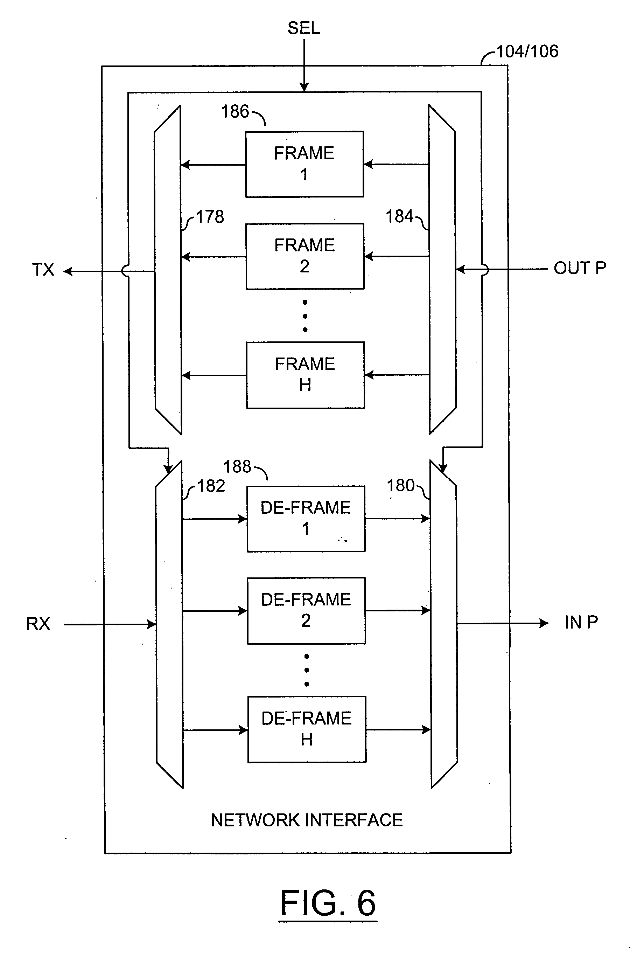

Referring to FIG. 6, a detailed block diagram of the network interface 104/106 is shown. The network interface 104/106 generally comprises a multiplexer 178, another multiplexer 180, a demultiplexer 182, another demultiplexer 184, two or more circuit 186, and two or more circuits 188. The circuits 186 may be implemented as framing circuits. The circuits 188 may be implemented as de-framing circuits.

The signal OUTP may be provided to the demultiplexer 184. The demultiplexer 184 may route the signal OUTP among the framing circuits 186 in accordance with the signal SEL. The multiplexer 178 may receive the signals TX from the framing circuits 186 and present one of the signals TX to the network 102/104 as selected by the signal SEL.

The demultiplexer 182 may receive the signal RX. The demultiplexer 182 may route the signal RX among the de-frame circuits 188 as selected by the signal SEL. The multiplexer 180 may receive the signals INP from the de-framing circuits 188 and present one of the signals INP to the processing circuit 128 as selected by the signal SEL.

Each pair of the framing circuits 186 and the de-framing circuit 188 (e.g., 186A-188A, 186B-188B) may be designed to operate on one or more network protocols. In one embodiment, each pair of framing circuits 186 and de-framing circuits 188 may be implemented to operate on a unique network protocol. In another embodiment, one or more pairs of framing circuits 186 and de-framing circuits 188 may be programmable to perform different framing methods and de-framing methods on several different network protocols based upon the signal SEL. In still another embodiment, a mixture of network protocol dedicated pairs and network protocol programmable pairs of framing circuits 186 and de-framing circuits 188 may be implemented to meet the design criteria of a particular application.

The function performed by the flow diagram of FIG. 4 may be implemented using a conventional general purpose digital computer programmed according to the teachings of the present specification, as will be apparent to those skilled in the relevant art(s). Appropriate software coding can readily be prepared by skilled programmers based on the teachings of the present disclosure, as will also be apparent to those skilled in the relevant art(s).

The present invention may also be implemented by the preparation of ASICs, FPGAs, or by interconnecting an appropriate network of conventional component circuits, as is described herein, modifications of which will be readily apparent to those skilled in the art(s).

The present invention thus may also include a computer product which may be a storage medium including instructions which can be used to program a computer to perform a process in accordance with the present invention. The storage medium can include, but is not limited to, any type of disk including floppy disk, optical disk, CD-ROM, and magneto-optical disks, ROMs, RAMs, EPROMs, EEPROMs, Flash memory, magnetic or optical cards, or any type of media suitable for storing electronic instructions.

While the invention has been particularly shown and described with reference to the preferred embodiments thereof, it will be understood by those skilled in the art that various changes in form and details may be made without departing from the spirit and scope of the invention.

## Claims

1. A circuit comprising:
a database configured to store a pointer for each first parameter of a network protocol; and
a processing circuit configured to (i) process at least one of said first parameters in an incoming packet in accordance with said pointer to produce a second parameter and (ii) present an outgoing packet containing said second parameter.

2. The circuit according to claim 1, wherein said database is further configured to store an offset and a length for each said first parameter, and said processing circuit is further configured to partition said incoming packet in accordance with said offsets and said lengths to extract said first parameters.

3. The circuit according to claim 2, further comprising an interface configured to download said offsets, said lengths, and said pointers for storage in said database.

4. The circuit according to claim 1, 2 or 3, wherein said processing circuit comprises:
a parsing circuit configured to partition said incoming packet;
a plurality of peripheral blocks each (i) linked to said pointers and (ii) configured to perform a process involving said first parameters; and
an assembling circuit configured to generate said outgoing packet.

5. The circuit according to claim 4, wherein said database is further configured to store a second offset, and a second length for each said second par-ameter of a second network protocol.

6. The circuit according to claim 4 or 5, further comprising an interface connectable to a peripheral block external to said circuit.

7. The circuit according to claim 4, 5 or 6, wherein said peripheral blocks are at least two circuits of a content addressable memory circuit, a time to live circuit, a comparison circuit, a counter circuit, a value swapping circuit, a stuffing circuit, a de-stuffing circuit, a cyclic redundancy checksum circuit, a parity circuit, a first-in-first-out circuit, a length construction generator circuit, a header error control synchronization circuit, a frame relay lookup circuit, a data link connection identifier circuit, a protocol identification analysis circuit, a point-to-point protocol verification circuit, a parameter discard circuit, and a buffer circuit.

8. The circuit according to claim 4, 5, 6 or 7, wherein at least one peripheral block is configured to simultaneously processes a plurality of first parameters.

9. The circuit according to any preceding claim, wherein said processing circuit is configured as only hardware.

10. An assembly comprising:
a first circuit configured to delineate a receive frame from a first network having a network protocol to produce an incoming packet;
a second circuit configured to (i) store a pointer for each first parameter of said network protocol, (ii) process at least one first parameter in said incoming packet in accordance with said pointer to produce a second parameter, and (iii) present an outgoing packet containing said second parameter; and
a third circuit configured to frame said outgoing packet to present a transmit frame to a second network.

11. The assembly according to claim 10, wherein said second circuit is further configured to store an offset and a length for each said first parameters and partition said incoming packet in accordance with said offsets and said lengths to extract said first parameters from said incoming packet.

12. The assembly according to claim 10 or 11, wherein said first circuit is further configured to provided a plurality of frame delineation methods for a plurality of network protocols.

13. The assembly according to claim 12, further comprising an interface configured to permit a selection among said frame delineation methods.

14. The assembly according to claim 10, 11, 12 or 13, wherein said second circuit is further configured to provided a plurality of framing methods for a plurality of network protocols.

15. The assembly according to claim 14, further comprising an interface configured to permit a selection among said framing methods.

16. The assembly according to claim 10, 11, 12, 13, 14 or 15, wherein said third circuit is further configured to delineate a second receive frame from said second network to produce said incoming packet.

17. The assembly according to claim 16, wherein said first circuit is further configured to frame said outgoing packet to present a second transmit frame to said first network.
